# EUROPEAN PATENT APPLICATION

(11) **EP 1 950 240 A1**
(43) Date of publication of application: **30.07.2008**
(21) Application number: 07001700.9
(22) Date of filing: 26.01.2007
(51) Int. Cl.: C08K 9/06, C08J 3/20

(54) **Method of modifying of composite resin**

(71) Applicant: Yasuhiro, Mori, Tokyo 135-0042 (JP)
(72) Inventor: Mori, Yasuhiro, Tokyo 135-0042 (JP)
(74) Representative: Hoffmann, Eckart

(57) **Abstract**

The present invention provides a method for modifying a composite resin, capable of efficiently obtaining a composite resin with the impact resistance or the like improved. A method for modifying a composite resin containing both an amorphous resin and a crystalline resin or either, and a carbon compound, wherein a modified carbon compound having a wet index (measurement temperature 25°C) of 40 dyn/cm or more with a silicatizing flame treatment, in which a modifier compound having at least a silane atom is used as a fuel, applied on the surface of a carbon black, a graphite or the like as a carbon compound.

## Description

### BACKGROUND OF THE INVENTION

### [Field of the Invention]

The present invention relates to a method for modifying a composite resin, and particularly, to a method for modifying a composite resin, capable of efficiently obtaining a composite resin with the impact resistance or the like improved.

### [Description of the Related Art]

Conventionally, as a composite resin containing a scale like graphite, a resin composition for a sliding member has been known. The resin composition is obtained by adding 0 to 150 parts by weight of a crystalline resin having a melting point of 200°C or more and 5 to 100 parts by weight of a scaly graphite having an average particle size of 5 to 100 µm with respect to 100 parts by weight of an amorphous resin having a glass transition temperature of 140°C or more (see, for example, JP10-182872A (claims)).

On the other hand, there has been proposed a surface modifying method capable of evenly and sufficiently modifying the surface of a carbon compound or the like in such a manner that efficient combustion is facilitated even in the case of using a relatively large amount of a modifier compound containing a silane atom or the like by applying a flame blowing process of a fuel gas containing a modifier compound having a specific boiling point (silicatizing flame treatment (silicon oxidizing flame treatment), titanium oxidizing flame treatment, and aluminum oxidizing flame treatment) is proposed (see, for example, WO03/069017 (claims)).

However, according to the resin composition for a sliding member disclosed in JP10-182872A (claims), not only the kind of a usable carbon compound is limited, but also a problem of the poor impact resistance is involved due to the high glass transition temperature of the amorphous resin, or the high melting point of the crystalline resin.

Moreover, the method disclosed in WO03/069017 (claims) is a surface modifying method capable of modifying the surface of the carbon compound or the like sufficiently over a long time. However, improvement of the impact resistance or the like of a specific resin in the case of use for the surface treatment of a carbon compound in combination with the specific resin has not been found out.

### SUMMARY OF THE INVENTION

Then, the present inventors have found out the remarkable improvement of the impact resistance or the like of a specific resin in the case of applying a silicatizing flame treatment to the surface of a carbon compound so as to have a predetermined wet index and using the carbon compound in combination with the specific resin, thereby to complete the present invention.

That is, an object of the present invention is to provide a method for modifying a composite resin, capable of efficiently obtaining a composite resin with the impact resistance or the like improved.

According to one aspect of the present invention, there is provided a method for modifying a composite resin containing both an amorphous resin and a crystalline resin or either, and a carbon compound, wherein a modified carbon compound having a wet index (measurement temperature 25°C) of 40 dyn/cm or more with a silicatizing flame treatment , in which a modifier compound having at least a silane atom is used as a fuel, applied on the surface thereof is contained as the carbon compound so as to solve the above-mentioned problems.

That is, the carbon compound to be combined with a specific resin having a silicatizing flame treatment , in which a modifier compound containing a silane atom is used partly or mainly as a fuel, applied on the surface thereof so as to have a predetermined wet index is added, so that the impact resistance or the like of the specific resin can remarkably be improved.

In the present invention, the "silicatizing flame treatment" refers to a flame treatment using, as a fuel, any of an igniting gas, a gas mixture, an aerosol and a spray, containing a silane compound, and also to a surface treatment for forming a silicon oxide layer on the surface of a carbon compound by the flame pyrolysis method.

Further, to carry out the method for modifying a composite resin of the present invention, it is preferable that the carbon compound is at least one of a carbon black, a graphite, a carbon fiber and an aramid fiber.

Since such a carbon compound is used, the impact resistance or the like of the specific resin can remarkably be improved by adding a relatively small amount of a modified carbon compound.

Furthermore, to carry out the method for modifying a composite resin of the present invention, it is preferable that, in the case where the carbon compound is particle like, its average particle size is a value in a range of 0.01 to 100 µm.

Since such a carbon compound is used, the impact resistance or the like of the specific resin can be improved further efficiently. Moreover, with such an addition range, a control can be made into, for example, a desired conductivity and electric insulation property.

Moreover, to carry out the method for modifying a composite resin of the present invention, it is preferable that the silicatizing flame treatment is applied to the carbon compound in a fluid state.

Since such a carbon compound is used, the impact resistance or the like of the specific resin can remarkably be improved evenly and stably. In addition, the modified carbon compound can be obtained efficiently, so that the production cost of the composite resin can remarkably be lowered.

Moreover, to carry out the method for modifying a composite resin of the present invention, it is preferable that the amorphous resin is at least one selected from the group consisting of a polycarbonate resin, a polysulfone resin, a polyether imide resin, a polyallylate resin and a modified polyphenylene ether resin.

Use of such specific amorphous resins makes it possible to improve the impact resistance or the like of these resins further efficiently.

To carry out the method for modifying a composite resin of the present invention, it is also preferable that the crystalline resin is at least one selected from the group consisting of a polyamide resin, a polyester resin, a polyacetal resin, a polyphenylene sulfide resin, a polyether ether ketone resin and a polytetrafluoro ethylene resin.

Use of such specific crystalline resins can improve the impact resistance or the like of these resins further efficiently.

Moreover, to carry out the method for modifying a composite resin of the present invention, it is preferable that the addition amount of the modified carbon compound is a value in a range of 0.01 to 30 parts by weight with respect to 100 parts by weight of the resin.

According to the addition amount, the impact resistance or the like of the specific resin can be improved further efficiently.

To carry out the method for modifying a composite resin of the present invention, it is also preferable that the modifier compound having a silane atom is a silane compound having at least one of a nitrogen atom, a halogen atom, a vinyl group and an amino group in the molecule or at the molecule end.

Since such a specific silane compound is used, the control of the wettability of the modified carbon compound can be facilitated to improve the impact resistance or the like of the specific resin further efficiently.

To carry out the method for modifying a composite resin of the present invention, it is also preferable to include a step of applying the surface treatment to the surface of the carbon compound with a coupling agent.

According to the surface treatment, the impact resistance or the like of the specific resin can remarkably be improved in combination with the silicatizing flame treatment.

Moreover, to carry out the method for modifying a composite resin of the present invention, it is preferable that the coupling agent is at least one compound selected from the group consisting of an amino silane coupling agent, a mercapto silane coupling agent, a glycidoxy silane coupling agent, and a vinyl group-containing silane coupling agent.

Since the surface treatment is applied using such a coupling agent, the impact resistance or the like of the specific resin can remarkably be improved in combination with the silicatizing flame treatment.

### BRIEF DESCRIPTION OF THE DRAWINGS

- FIG. 1: is a graph showing the relationship between a wet index in a modified carbon compound and an impact resistance (IZOD impact strength) in a composite resin; and
- FIG. 2: is a diagram for explaining a processing apparatus for carrying out a silicatizing flame treatment.

### DESCRIPTION OF THE PREFERRED EMBODIMENTS

Hereinafter, an embodiment of a method for modifying a composite resin will be explained specifically with reference to the drawings arbitrarily.

### [First Embodiment]

A first embodiment is a method for modifying a composite resin containing both an amorphous resin and a crystalline resin or either, and a carbon compound, wherein a modified carbon compound having a wet index (measuring temperature 25°C) of 40 dyn/cm or more with a silicatizing flame treatment, in which a modifier compound having at least a silane atom is used as a fuel, applied on the surface thereof is contained as the carbon compound.

### 1. Resin

### (1) Amorphous resin

Although not particularly limited thereto, the kind of the amorphous resin used in the first embodiment is preferably at least one selected from the group consisting of, for example, a polycarbonate resin, a polysulfone resin, a polyether imide resin, a polyallylate resin and a modified polyphenylene ether resin.

This is because, by use of such specific amorphous resins, the impact resistance or the like of these resins can be improved further efficiently while maintaining, for example, a predetermined heat resistance and mechanical characteristics.

In the case where, for example, a polycarbonate resin is used as the amorphous resin, it is preferable to set the viscosity average molecular weight thereof (measurement solvent: methylene chloride, measurement temperature: 25°C) to a value in a range of 40,000 to 200,000 because the excellent compatibility with respect to the modified carbon compound can be easily obtained while maintaining, for example, a predetermined heat resistance and mechanical characteristics.

It is also preferable that a glass transition temperature of the amorphous resin is a value of 140°C or more.

This is because, if the glass transition temperature of the amorphous resin becomes less than 140°C, the use application may be limited remarkably due to the decline of the heat resistance and mechanical strength of a composite resin to be obtained.

However, if the glass transition temperature of the amorphous resin is excessively high, the dispersion property of the modified carbon compound may be remarkably lowered, or the improvement of the impact resistance may be insufficient. Therefore, the glass transition temperature of the amorphous resin is more preferably a value in a range of 150 to 250°C, and it is further preferably a value in a range of 160 to 220°C.

The glass transition temperature of the amorphous resin can be measured using, for example, a differential scanning calorimeter (DSC) or a viscoelasticity measuring device.

### (2) Amorphous resin

Although not particularly limited thereto, the kind of the crystalline resin used in the first embodiment is preferably at least one selected from the group consisting of, for example, a polyamide resin, a polyester resin, a polyacetal resin, a polyphenylene sulfide resin, a polyether ether ketone resin and a polytetrafluoro ethylene resin.

The reason thereof is that, by use of such specific crystalline resins, the impact resistance or the like of these resins can be improved further efficiently while maintaining a predetermined heat resistance and mechanical characteristics.

In the case where, for example, a polyamide resin or a polyester resin is used as the crystalline resin, it is preferable that the average molecular weight thereof is a value in a range of 30,000 to 200,000 because the excellent compatibility with the modified carbon compound can be easily obtained while maintaining a predetermined heat resistance and mechanical characteristics.

It is also preferable that the melting point of the crystalline resin is a value of 200°C or more.

This is because, if the melting point of the crystalline resin becomes less than 200°C, the use application may be limited remarkably due to the decline of the heat resistance and mechanical strength of a composite resin to be obtained.

However, if the melting point of the crystalline resin is excessively high, the dispersion property of the modified carbon compound may be remarkably lowered, or the improvement of the impact resistance may be insufficient. For this reason, the melting point of the crystalline resin is more preferably a value in a range of 210 to 300°C, and it is further preferably a value in a range of 220 to 280°C.

The melting point of the crystalline resin can also be measured using, for example, a differential scanning calorimeter (DSC) or a viscoelasticity measuring device.

### (3) Other resins

For the purpose of modification of the viscoelastic characteristics, or the like, it is also preferable to add to a specific resin at least one rubber selected from the group consisting of a silicone rubber, a fluorine rubber, a natural rubber, a neoprene rubber, a chloroprene rubber, a urethane rubber, an acrylic rubber, an olefin rubber, a styrene-butadiene rubber, an acrylonitrile-butadiene rubber, an ethylene-propylene rubber, an ethylene-propylene-diene rubber, a butadiene rubber, a butyl rubber, a styrene-based thermoplastic elastomer and a urethane-based thermoplastic elastomer.

Moreover, for the purpose of the further modification of the mechanical characteristics, the impact resistance or the like, it is also preferable to add to a specific resin at least one selected from the group consisting of a polyethylene resin (high density polyethylene, medium density polyethylene, low density polyethylene, high pressure method polyethylene, medium pressure method polyethylene, low pressure method polyethylene, linear low density polyethylene, branched low density polyethylene, high pressure method linear low density polyethylene, ultra-solid amount polyethylene, or cross-linked polyethylene), a polypropylene resin, a modified polypropylene resin, a polymethyl pentene resin, a polyacrylic resin, a polyimide resin, a polystyrene resin, a polyvinyl chloride resin, a polyacrylonitrile-butadiene-styrene resin (ABS resin) and a polyurethane resin.

Since the modifying effect of the viscoelastic characteristics, the impact resistance or the like can easily be achieved, it is preferable that, in the case where the other resin is an amorphous resin, the glass transition temperature thereof is a value of 50 to less than 140°C. Furthermore, in the case where the other resin is a crystalline resin, it is preferable that the melting point thereof is a value of 70 to less than 200°C.

### 2. Modified carbon compound

### (1) Carbon compound .

Although not particularly limited thereto, the kind of the carbon compound as a raw material is preferably at least one of a carbon black, a graphite, a carbon fiber and an aramid fiber.

This is because, by use of such a carbon compound, the impact resistance or the like of the specific resin can remarkably be improved by adding a relatively small amount of a modified carbon compound.

Particularly, a graphite is a preferable carbon compound since it is an amorphous resin and is capable of improving further efficiently the impact resistance of a polycarbonate resin having the excellent transparency, mechanical characteristics and the like.

Moreover, in the case where the carbon compound is particle like, it is preferable that the average particle size thereof is a value in a range of 0.01 to 100 µm.

The reason thereof is that the impact resistance or the like of the specific resin can be improved further efficiently by use of such a particle-like carbon compound. More specifically, when the average particle size of the carbon compound is less than 0.01 µm, the mixture dispersion in the composite resin becomes uneven, so that the impact resistance value tends to be lowered rather than improved. On the other hand, also when the average particle size of the carbon compound is more than 100 µm, the mixture dispersion in the composite resin becomes uneven, so that the impact resistance value rends to be lower rather than improved.

If the average particle size of the carbon compound is a value in a range of 0.01 to 100 µm, a control can be made into, for example, a desired conductivity and electric insulation property.

Accordingly, when the carbon compound is particle like, the average particle size thereof is further preferably a value in a range of 0.1 to 50 µm, and it is further preferably a value in a range of 0.5 to 30 µm.

The average particle size of the carbon compound or its fiber length to be described later can be measured by, for example, an image analysis method utilizing a coulter counter or an electron microscope.

On the other hand, when the carbon compound is fiber like, the fiber length thereof is preferably a value in a range of 0.1 to 1,500 µm.

This is because the impact resistance or the like of the specific resin can be improved further efficiently by use of such a fiber like carbon compound. In addition, with such an addition range, a control can be made into, for example, a desired conductivity and electric insulation property.

Therefore, when the carbon compound is fiber like, the fiber length thereof is more preferably a value in a range of 1 to 500 µm, and it is further preferably a value in a range of 10 to 300 µm.

When the carbon compound is fiber like, it is preferable that the diameter of the fiber is a value in a range of 0.01 to 100 µm.

### (2) Wet index (surface energy)

It is also preferable that a wet index (measurement temperature 25°C) of a modified carbon compound subjected to surface modification is a value of 40 dyn/cm or more.

The reason thereof is that, if the wet index of such a carbon compound is a value of less than 40 dyn/cm, the impact resistance value in the composite resin tends to be lowered rather than improved.

However, if the wet index of such a carbon compound is excessively large, not only the surface treatment is needed for a considerable amount, but also the carbon compound may be thermally deteriorated.

For this reason, the wet index of the carbon compound subjected to surface modification is more preferably a value in a range of 45 to 80 dyn/cm, and it is further preferably a value in a range of 50 to 75 dyn/cm.

In the case where the modified carbon compound is fiber like, the diameter of the fiber is preferably a value in a range of 0.01 to 100 µm.

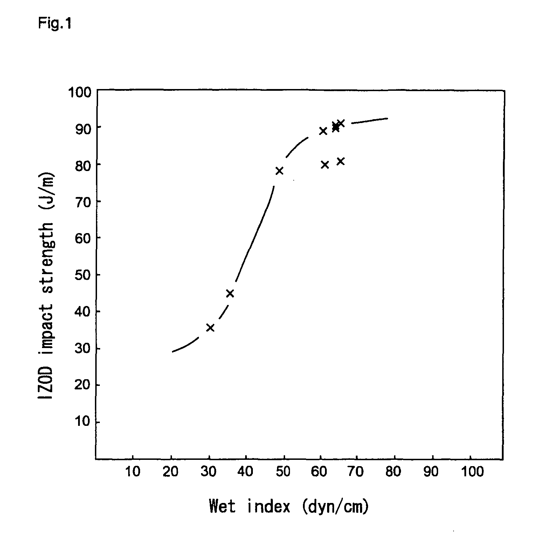

Here, with reference to FIG. 1, explanation will be given to the relationship between a wet index of a modified carbon compound and an impact resistance of a composite resin mainly consisting of a polycarbonate resin. In FIG. 1, the lateral axis represents the wet index (dyn/cm) of the modified carbon compound, and the vertical axis represents an IZOD impact strength (J/m) as an index of the impact resistance of the composite resin.

As it can be understood easily from FIG. 1, as larger the value of the wet index of the modified carbon compound, the IZOD impact strength of the composite resin tends to be larger. Particularly, in the case of a value of 40 dyn/cm or more, the value is remarkably improved so as to have a value of 60 (J/m) or more. Therefore, it can be said to be effective to set the wet index of the modified carbon compound to 40 dyn/cm or more in order to remarkably improve the impact resistance value in the composite resin.

### (3) Contact angle

Moreover, in a modified carbon compound subjected to surface modification, a contact angle measured with water (measurement temperature 25°C) is preferably a value in a range of 0.1 to 30°.

This is because, if the contact angle of such a carbon compound is a value of less than 0.1°, the surface treatment is carried out excessively, so that the carbon compound may be deteriorated thermally. On the other hand, if the contact angle of such a carbon compound is more than 30°, the mixing dispersion in the composite resin becomes uneven, so that the impact resistance value tends to be lowered rather than improved.

Therefore, in the carbon compound subjected to surface modification, the contact angle measured with water (measurement temperature 25°C) is more preferably a value in a range of 0.5 to 25°, and it is further preferably a value in a range of 1 to 20°.

The contact angle of the modified carbon compound (measurement subject: water, measurement temperature: 25°C) can be measured using, for example, an Abbe's contact angle measuring device.

### (4) Addition amount

It is also preferable that the addition amount of the modified carbon compound is a value in a range of 0.01 to 30 parts by weight with respect to 100 parts by weight of the resin.

This is because the addition amount of the modified carbon compound is set to a value in such a range, whereby the impact resistance or the like of the specific resin can be improved further efficiently.

That is, if the addition amount of such a modified carbon compound is a value of less than 0.01 part by weight, the impact resistance improving effect in the composite resin may not be achieved. On the other hand, if the addition amount of such a modified carbon compound is more than 30 parts by weight, the impact resistance of the composite resin may rather be lowered due to difficulty in even mixing and dispersion.

Therefore, the addition amount of the modified carbon compound is more preferably a value in a range of 1 to 20 parts by weight with respect to 100 parts by weight of the resin, and it is further preferably a value in a range of 3 to 10 parts by weight.

### (5) Other additives

It is also preferable to add an inorganic filler such as titanium oxide, zirconium oxide, zinc oxide, indium oxide, tin oxide, silica, talc, calcium carbonate, lime, zeolite, gold, silver, copper, zinc, nickel, tin, lead, solder, glass and ceramic alone by one kind or in combination of two or more kinds, other than the modified carbon compound.

Adding such an inorganic filler makes it possible to improve the physical characteristics such as the mechanical strength, the heat resistance, the conductivity and the electric insulation property of the resin.

In the case where an inorganic filler is added together with the modified carbon compound, the addition amount thereof with respect to the total amount is a value in a range of 0.01 to 80% by weight, more preferably a value in a range of 0.1 to 50% by weight, and further preferably a value in a range of 1 to 30% by weight.

### 3. Coupling agent treatment

Moreover, it is preferable to include a step of applying the surface treatment to the surface of a carbon compound (including a modified carbon compound) with a coupling agent.

This is because the surface treatment is performed to remarkably improve the impact resistance or the like of the specific resin in combination with a silicatizing flame treatment.

Further, according to the surface treatment, the impact resistance or the like of the specific resin can be improved certainly even in the case where the silicatizing flame treatment is carried out unevenly.

Furthermore, usable examples of such a coupling agent include a silane coupling agent, a titanium coupling agent, and an aluminum coupling agent.

More specifically, the coupling agent is preferably at least one compound selected from the group consisting of an amino silane coupling agent, a mercapto silane coupling agent, a glycidoxy silane coupling agent, and a vinyl group-containing silane coupling agent.

This is because, by carrying out the surface treatment using such a coupling agent, a small amount of the coupling agent can remarkably improve the impact resistance or the like of the specific resin in combination with the silicatizing flame treatment.

It is preferable that the treatment amount of the coupling agent is a value in a range of 0.1 to 10 parts by weight with respect to 100 parts by weight of the carbon compound (including the modified carbon compound).

### 4. Silicatizing flame treatment

### (1) Silane compound

A boiling point (in an atmospheric pressure) of a silane compound as a modifier compound is preferred to be a value in a range of 10 to 200°C.

The reason thereof is that, if the boiling point of such a silane compound is a value of less than 10°C, handling may be difficult due to the drastic volatile property. On the other hand, if the boiling point of the silane compound is more than 200°C, the mixing property with the air flow is declined, which makes the surface modification of the carbon compound uneven or makes it difficult to retain the modifying effect over a long time, in some cases.

For this reason, the boiling point of the silane compound is more preferably a value in a range of 15 to 180°C, and it is further preferably a value in a range of 20 to 120°C.

The boiling point of the silane compound can be adjusted by limiting the structure of the modifier compound itself. Additionally, it can be adjusted also by arbitrarily using a mixture of an alkyl silane compound having a relatively low boiling point or the like and an alkoxy silane compound having a relatively high boiling point or the like, by making use of the azeotrope phenomenon.

Examples of the silane compound include, but not particularly limited thereto, an alkyl silane compound and an alkoxy silane compound.

Moreover, preferable examples of the alkyl silane compound or the alkoxy silane compound include tetramethyl silane, tetraethyl silane, dimethyl dichloro silane, dimethyl diphenyl silane, diethyl dichloro silane, diethyl diphenyl silane, methyl trichloro silane, methyl triphenyl silane, dimethyl diethyl silane, tetramethoxy silane, tetraethoxy silane, methyl trimethoxy silane, dimethyl dimethoxy silane, phenyl trimethoxy silane, dichloro dimethoxy silane, dichloro diethoxy silane, diphenyl dimethoxy silane, diphenyl diethoxy silane, trichloro methoxy silane, trichloro ethoxy silane, triphenyl methoxy silane, and triphenyl ethoxy silane, which can be used alone by one kind or in combination of two or more kinds.

The silane compound is more preferably a compound having at least one of a nitrogen atom, a halogen atom, a vinyl group and an amino group in the molecule or at the molecule end.

More specifically, the silane compound is preferably at least one compound out of hexamethyl disilazane (boiling point: 126°C), vinyl trimethoxy silane (boiling point: 123°C), vinyl triethoxy silane (boiling point: 161°C), trifluoropropyl trimethoxy silane (boiling point: 144°C), trifluoropropyl trichloro silane (boiling point: 113 to 114°C), 3-aminopropyl trimethoxy silane (boiling point: 215°C), 3-aminopropyl triethoxy silane (boiling point: 217°C), hexamethyl disiloxane (boiling point: 100 to 101°C), and 3-chloropropyl trimethoxy silane (boiling point: 196°C).

This is because, according to such a silane compound, the mixing property with a carrier gas can be improved so as to form a particle-like product (silica layer) on the surface of the carbon compound for achieving the modification further evenly as well as the silane compound can partially remain on the surface of the carbon compound easily so as to obtain a more excellent adhesion force between the carbon compound and a coating film made of various kinds of ultraviolet ray curable resins or the like.

Moreover, it is preferable that the average molecular weight of the silane compound is a value in a range of 50 to 1,000 in the mass spectrum measurement.

This is because, if the average molecular weight of such a modifier compound is less than 50, handling may be difficult due to high volatility. On the other hand, if the average molecular weight of the modifier compound is more than 1,000, mixing with the air or the like may be difficult due to vaporization by heating.

Therefore, the average molecular weight of the silane compound in the mass spectrum measurement is more preferably a value in a range of 60 to 500, and it is further preferably a value in a range of 70 to 200.

Moreover, the density of the silane compound in a liquid state is preferably a value in a range of 0.3 to 0.9 g/cm³.

This is because, if the density of such a silane compound is less than 0.3 g/cm³, handling may be difficult, or storage in an aerosol can may be difficult. On the other hand, if the density of such a modifier compound is more than 0.9 g/cm³, the compound may be difficult to vaporize as well as it may be in a state completely separated form the air or the like when stored in an aerosol can.

For this reason, the density of the silane compound is more preferably a value in a range of 0.4 to 0.8 g/cm³, and it is further preferably a value in a range of 0.5 to 0.7 g/cm³.

The addition amount of the silane compound is preferably a value in a range of 1 × 10⁻¹⁰ to 10 mole% with respect to the total amount of the gaseous product as the fuel as 100 mole%.

This is because, if the addition amount of such a silane compound is a value less than 1 × 10⁻¹⁰ mole%, the modifying effect for the carbon compound is not provided in some cases. On the other hand, if the addition amount of the modifier compound is more than 10 mole%, the mixing property of the silane compound and the air or the like is lowered, and thereby oxidation of the silane compound may be insufficient.

Therefore, with respect to the total amount of the gaseous product as 100 mole%, the addition amount of the silane compound is more preferably a value in a range of 1 × 10⁻⁹ to 5 mole%, and it is further preferably a value in a range of 1 × 10⁻⁸ to 1 mole%.

### (2) Igniting gas and combustible gas

In general, it is preferable to add an igniting gas or a combustible gas into the fuel gas. Examples of the igniting gas or combustible gas include a hydrocarbon gas such as a propane gas and a natural gas, hydrogen, and furthermore, oxygen and air. In the case of using the fuel gas stored in an aerosol can, it is preferable to use a propane gas, compressed air and the like the igniting gas.

The content of such an igniting gas with respect to the total amount of the fuel gas as 100 mole% is preferably a value in a range of 80 to 99.9 mole%.

The reason thereof is that, if the content of the igniting gas is a value less than 80 mole%, the mixing property of a silicone containing compound and the air or the like is lowered, so that the silicon-containing compound may be combusted incompletely. On the other hand, if the addition amount of the silicon-containing compound is more than 99.9 mole%, the modifying effect for a solid substance may is not provided in some cases.

Accordingly, with respect to the total amount of the fuel gas as 100 mole%, the addition amount of the silicon-containing compound is more preferably a value in a range of 85 to 99 mole%, and it is further preferably a value in a range of 90 to 99 mole%.

### (3) Carrier gas

Moreover, for easy thermal decomposition of the silane compound and oxidization thereof, it is preferable to mix the silane compound with a carrier gas such as air or oxygen.

However, it is also preferable to use together with the air or oxygen, an inert gas such as argon, nitrogen, and a vaporized fluorine carbonate as another carrier gas. This is because the use of the carrier gas makes it possible to accurately and smoothly transfer the silane compound.

With respect to the gaseous product to be flown onto the carbon compound as 100 mole%, the mixing amount of the carrier gas is preferably a value in a range of 80 to 99.9 mole%.

This is because, if the mixing amount of the carrier gas is a value less than 80 mole%, the mixing property with a silane compound is lowered, which makes it difficult to blow the carbon compound evenly. On the other hand, if the mixing amount of the carrier gas is more than 99.9 mole%, the modifying effect for the carbon compound is not provided in some cases.

For this reason, with respect to the gaseous product to be blown onto the carbon compound as 100 mole%, the mixing amount of the carrier gas is more preferably a value in a range of 85 to 99 mole%, and it is further preferably a value in a range of 90 to 99 mole%.

It is also preferable to add a third component other than the carrier gas, such as a hydrocarbon gas in a range of 1 to 10 mole% so as to have the total amount of 100 mole% into the carrier gas containing the silane compound.

Additionally, at the time of carrying out the first surface modifying method and the second surface modifying method, the carrier gas is also preferably used as a heat source for oxidizing a predetermined silane compound.

### (4) Silicatizing flame

Moreover, it is preferable that the flame temperature is a value in a range of 400 to 2,500°C.

This is because, if the flame temperature is a value less than 400°C, thermal decomposition of the silane compound for forming a granule like product having a predetermined shape on the surface of the carbon compound, or the like may be difficult. On the other hand, if the flame temperature is more than 2,500°C, the gaseous product is excessively heated, whereby the carbon compound as the subject of the surface modification may be thermally deformed or thermally deteriorated.

Therefore, the flame temperature is more preferably a value in a range of 500 to 1,800°C, and it is further preferably a value in a range of 800 to 1,200°C.

It is also preferable to provide a burner for producing the flame. The kind of the burner is not particularly limited. For example, any of a premixing burner, a diffusion burner, a partially premixing burner, a spray burner, an evaporation burner, and a minute powdery coal burner can be used.

Moreover, it is also preferable to provide a heat source other than the burner. Although the kind of the heat source is not particularly limited, for example, at least one heating means selected from the group consisting of a laser, a halogen lamp, an infrared lamp, a high frequency coil, an induction heating device, a hot air heater, and a ceramic heater is preferable.

For example, by use of a laser, the silane compound can be thermally decomposed by heating extremely rapidly on the spot so as to enable the surface treatment of the carbon compound.

Moreover, by use of a halogen lamp or an infrared lamp, a large amount of the silane compound can be thermally decomposed by the extremely even temperature distribution so as to enable the efficient surface treatment of the carbon compound.

Also, by use of a high frequency coil or an induction heating device, the silane compound can be thermally decomposed by heating extremely rapidly so as to enable the efficient surface treatment of the carbon compound.

Furthermore, by use of a hot air heater or a ceramic heater, a temperature treatment of, for example, more than 2,000°C can be enabled for various sizes from a small scale to a large scale, so that the silane compound can be thermally decomposed easily so as to enable the efficient surface treatment of the carbon compound.

### (5) Surface treatment conditions

It is preferable that the blowing time (injection time) of the gaseous product including the silane compound is a value in a range of 1 second to 100 seconds per 100 g of the carbon compound.

This is because, if the injection time is a value less than 1 second, the modifying effect by the silane compound may not be realized evenly. On the other hand, if the injection time is more than 100 seconds, the carbon compound as the subject of the surface modification may be thermally deformed or thermally decomposed, so that the kinds of the usable carbon compounds are excessively limited in some cases.

For this reason, the injection time per 100 g of the carbon compound is more preferably a value in a range of 5 to 60 seconds, and it is further preferably a value in a range of 15 to 30 seconds.

It is also preferable that the carbon compound is in a fluid state with the silicatizing flame treatment applied.

That is, this is because, by using the carbon compound subjected to the surface treatment in such a state, the impact resistance or the like of the specific resin can remarkably be improved further evenly and stably. Moreover, the modified carbon compound can be obtained efficiently, which can remarkably reduce the product cost of the composite resin.

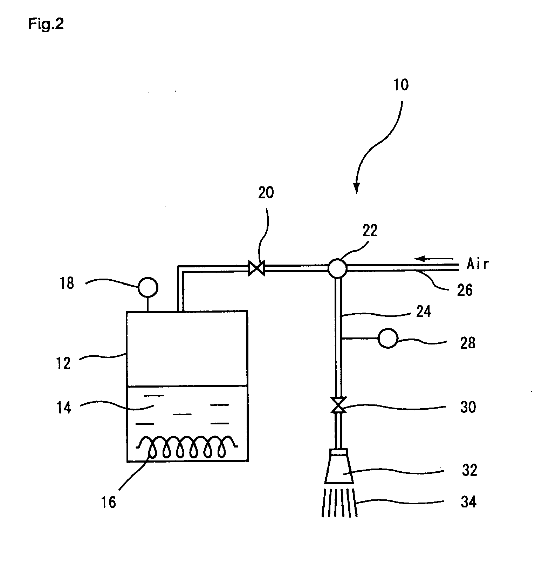

For this reason, it is preferable to apply the silicatizing flame treatment to the carbon compound by using, for example, a tumbler coater, a spray device or a soaking device as the device for producing the modified carbon compound as well as arbitrarily combining the processing device for executing the silicatizing flame treatment as shown in FIG. 2.

Moreover, to carry out the silicatizing flame treatment in various embodiments, it is preferable to use a surface modifying device 10 for a carbon compound comprising a storage tank 12, a transfer section 24, and an injection section 32 as shown in FIG. 2. The storage tank 12 is provided to store a silane compound 14. The transfer section 24 is provided to transfer a vaporized silane compound (hereinafter, it may be referred to as a first gaseous product) to a predetermined place. The injection section 32 is provided to blow a flame to the carbon compound using as the fuel a gaseous product (hereinafter, it may be referred to as a second gaseous product) including the silane compound 14 controlled to be a predetermined temperature.

That is, a flame using as the fuel a second gaseous product including the silane compound 14 controlled to be a predetermined temperature can be blown to the carbon compound from any direction, so that the carbon compound can be treated evenly and sufficiently.

Here, as shown in FIG. 2, it is preferable to have heating means 16 and a first storage tank 12 for storing the silane compound 14. In this example, the heating means 16 comprising a heater or the like is provided below the first storage tank 12 in order to vaporize the silane compound 14, which is liquid in an ordinary temperature and ordinary pressure state.

Then, at the time of applying the surface treatment to the carbon compound, it is preferable that the heating means 16 heats the silane compound 14 stored in the first storage tank 12 to a predetermined temperature, thereby transferring the silane compound 14 in a vaporized state and mixing the same with a carrier gas in a heated state, introduced as shown by the arrow so as to have a gaseous product of a predetermined temperature.

The content of the silane compound in the gaseous product is extremely important. Thus, in order to indirectly control the content of the silane compound, it is preferable to provide a pressure meter (or a liquid surface level meter) 18 in the first storage tank 12 so as to monitor the vapor pressure of the silane compound or the silane compound amount.

Moreover, it is preferable that the transfer section 24 of a pipe structure in general comprises a mixing chamber 22, valves 20, 30, and a flow rate meter (not shown) or a pressure meter 28. The mixing chamber 22 mixes the silane compound 14 as the first gaseous product transferred from the first storage tank 12, and the carrier gas (compressed air) to be transferred in a heated state from the second storage tank (not shown) to thereby provide the second gaseous product at a predetermined temperature. The valves 20, 30 and the flow rate meter (not shown) control the flow rate. The pressure meter 28 controls the pressure of the first and second gaseous products.

The injection section 32 preferably comprises a burner for blowing the second gaseous product at a predetermined temperature sent via the transfer section 24 to a carbon compound 40 to be treated. The kind of the burner is not particularly limited, and thus it may be any of a premixing burner, a diffusion burner, a partially premixing burner, a spray burner, an evaporation burner, and a minute powdery coal burner.

### Examples

### [Example 1]

### 1. Surface modification of carbon compound

100 g of a carbon compound (graphite (A), average particle size: 15 µm) was stored in a tumbler coater. Then, using the tumbler coater, the silicatizing flame treatment was carried out for 30 seconds by using the surface modifying device shown in FIG.2 while rotating at a rotational frequency of 60 rpm so as to obtain a modified carbon compound.

As a modifier compound, a mixture in a cartridge with 0.0001 mole% of tetramethoxy silane having a boiling point of 27°C, 0.00001 mole% of tetramethoxy silane having a boiling point of 122°C and the compressed air for the remainder was used.

### 2. Evaluation of modified carbon compound and composite resin

### (1) Wet index and contact angle

A wet index of the modified carbon compound subjected to the silicatizing treatment was measured by using a standard liquid (measurement temperature: 25°C).

Moreover, a contact angle of the modified carbon compound subjected to the silicatizing flame treatment (measurement liquid: water, measurement temperature: 25°C) was measured by using an Abbe's measuring device.

### (2) Dispersion property

The modified carbon compound subjected to the silicatizing flame treatment was added by the ratio of 3 parts by weight with respect to 100 parts by weight of a polycarbonate resin (viscosity average molecular weight: 20,000, glass transition temperature: 160°C) while kneading with a kneader.

Subsequently, the obtained composite resin was subjected to a molding process into a plate-like shape of 10 cm x 10 cm x 0.01 cm, and then, the dispersion property of the modified carbon compound in the molded article was evaluated with an electron microscope according to the following criteria.

Very good(VG): Dispersed evenly without observation of a lump of the modified carbon compound Good(G): Dispersed substantially evenly with slight observation of a lump of the modified carbon compound
Fair(F): Dispersed slightly unevenly with observation of a lump of the modified carbon compound
Bad(B): Dispersed apparently unevenly with remarkable observation of a lump of the modified carbon compound

### (3) impact resistance (IZOD impact strength)

The modified carbon compound subjected to the silicatizing flame treatment was added by the ratio of 15 parts by weight with respect to 100 parts by weight of a polycarbonate resin (viscosity average molecular weight: 20,000, glass transition temperature: 160°C) while kneading with a kneader.

Subsequently, the obtained composite resin was subjected to a molding process into a plate-like shape of 5 cm in length, 3 cm in width and 1 mm in thickness, the IZOD impact strength (J/m) in the molded article was measured based on the ASTMD256.

### (4) Bending strength

The bending strength (MPa) of the composite resin with the molding process applied was measured based on the JIS K7171.

### [Examples 2 to 7]

In Examples 2 to 7, as shown in Table 1, the modified carbon compound and the composite resin using the same were evaluated in the same manner as in Example 1 with the kind and the processing time of the silane compound, or the kind of the carbon compound (carbon fiber (CF(B)), carbon black (CB(C))) changed.

### [Comparative examples 1 and 2]

In Comparative example 1, the composite resin was evaluated in the same manner as in Example 1 except that a carbon compound without the silicatizing flame treatment applied was used.

In Comparative example 2, the composite resin was evaluated in the same manner as in Example 1 except that a carbon compound subjected to the silicatizing flame treatment but having a wet index (measurement temperature 25°C) of less than 40 dyn/cm was used.

**[Table 1]**

| | Carbon compound | Average particle size/fiber length (µm) | Processing time (second) | Modified carbon compound | | Composite resin | |
|---|---|---|---|---|---|---|---|
| | | | | Wet Index (dyn/cm) | Dispersion property | Bending strength (MPa) | Impact resistance (J/m) |
| Example 1 | Graphite (A) | 15 | 30 | 60 | VG | 84 | 89 |
| Example 2 | Graphite (A) | 15 | 10 | 48 | G | 80 | 78 |
| Example 3 | Graphite (A) | 15 | 60 | 64 | VG | 88 | 90 |
| Example 4 | C F (B) | 150 | 30 | 64 | VG | 81 | 91 |
| Example 5 | C F (B) | 150 | 60 | 65 | VG | 87 | 92 |
| Example 6 | C B (C) | 0. 1 | 30 | 61 | VG | 82 | 80 |
| Example 7 | C B (C) | 0. 1 | 60 | 65 | VG | 89 | 82 |
| Comparative example 1 | Graphite (A) | 15 | 0 | 30 | B | 73 | 36 |
| Comparative example 2 | Graphite (A) | 15 | 1 | 35 | F | 74 | 45 |

### [Examples 8 to 11]

In Examples 8 to 11, as shown in Table 2, the modified carbon compound and the composite resin using the same were evaluated in the same manner as in Example 1 except that the kind of the silane compound was changed.

**[Table 2]**

| | Carbon compound | Modifying agent | Processing time (second) | Modified carbon compound | | Composite resin | |
|---|---|---|---|---|---|---|---|
| | | | | Wet index (dyn/cm) | Dispersion property | Bending strength (MPa) | Impact resistance (J/m) |
| Example 8 | Graphite (A) | Silane A | 30 | 60 | VG | 84 | 89 |
| Example 9 | Graphite (A) | Silane B | 30 | 60 | VG | 84 | 89 |
| Example 10 | Graphite (A) | Silane C | 30 | 62 | VG | 85 | 90 |
| Example 11 | Graphite (A) | Silane D | 30 | 63 | VG | 85 | 90 |

| | | | | | | | |
|---|---|---|---|---|---|---|---|
| * Silane A (tetramethyl silane and tetramethoxy silane) * Silane B (tetramethyl silane) * Silane C (hexamethyl disilazane) * Silane D (hexamethyl disiloxane) | | | | | | | |

### [Examples 12 to 15]

In Examples 12 to 15, as shown in the table 3, the modified carbon compound and the composite resin using the same were evaluated in the same manner as in Example 1 except that the addition amount of the modified carbon compound was changed.

**[Table 3]**

| | Carbon compound | Addition amount by (part by weight) | Processing time (second) | Modified carbon compound | | Composite resin | |
|---|---|---|---|---|---|---|---|
| | | | | Wet index (dyn/cm) | Dispersion property | Bending strength (MPa) | Impact resistance (J/m) |
| Example 12 | Graphite (A) | 0.5 | 30 | 60 | VG | 84 | 89 |
| Example 13 | Graphite (A) | 1.0 | 30 | 60 | VG | 85 | 90 |
| Example 14 | Graphite (A) | 5.0 | 30 | 63 | VG | 87 | 91 |
| Example 15 | Graphite (A) | 10.0 | 30 | 65 | VG | 88 | 94 |

As heretofore explained, according to the present invention, a composite resin with an impact resistance or the like improved can be obtained efficiently by applying a silicatizing flame treatment to the surface of a carbon compound so as to have a predetermined wet index and combining the carbon compound with a specific resin.

Accordingly, a composite resin obtained by the present invention is expected to be used for an electric part housing, an electronic part material, various kinds of containers, various kinds of mechanical parts, a bumper for an automobile, and the like, which require the excellent impact resistance.

## Claims

1. A method for modifying a composite resin containing both an amorphous resin and a crystalline resin or either , and a carbon compound, wherein a modified carbon compound having a wet index (measurement temperature 25°C) of 40 dyn/cm or more with a silicatizing flame treatment, in which a modifier compound having at least a silane atom is used as a fuel, applied on the surface thereof is contained as the carbon compound.

2. The method for modifying a composite resin according to claim 1, wherein the carbon compound is at least one of a carbon black, a graphite, a carbon fiber and an aramid fiber.

3. The method for modifying a composite resin according to claim 1 or 2, wherein, in the case where the carbon compound is particle like, its average particle size is a value in a range of 0.01 to 100 µm.

4. The method for modifying a composite resin according to any one of claims 1 to 3, wherein the silicatizing flame treatment is applied to the carbon compound in a fluid state.

5. The method for modifying a composite resin according to any one of claims 1 to 4, wherein the amorphous resin is at least one selected from the group consisting of a polycarbonate resin, a polysulfone resin, a polyether imide resin, a polyallylate resin and a modified polyphenylene ether resin.

6. The method for modifying a composite resin according to any one of claims 1 to 5, wherein the crystalline resin is at least one selected from the group consisting of a polyamide resin, a polyester resin, a polyacetal resin, a polyphenylene sulfide resin, a polyether ether ketone resin and a polytetrafluoro ethylene resin.

7. The method for modifying a composite resin according to any one of claims 1 to 6, wherein the addition amount of the modified carbon compound is a value in a range of 0.01 to 30 parts by weight with respect to 100 parts by weight of the resin.

8. The method for modifying a composite resin according to any one of claims 1 to 7, wherein the modifier compound having a silane atom is a silane compound having at least one of a nitrogen atom, a halogen atom, a vinyl group and an amino group in the molecule or at the molecule end.

9. The method for modifying a composite resin according to any one of claims 1 to 8, including a step of applying the surface treatment to the surface of the carbon compound with a coupling agent.

10. The method for modifying a composite resin according to any one of claims 1 to 9, wherein the coupling agent is at least one compound selected from the group consisting of an amino silane coupling agent, a mercapto silane coupling agent, a glycidoxy silane coupling agent, and a vinyl group-containing silane coupling agent.
